(19) Europäisches Patentamt
European Patent Office
Office européen des brevets

(11) **EP 3 462 794 A1**

(12) **EUROPEAN PATENT APPLICATION**

(43) Date of publication:
03.04.2019 Bulletin 2019/14

(51) Int Cl.:
***H04W 72/04*** (2009.01)     ***H04W 72/08*** (2009.01)
***H04W 84/04*** (2009.01)

(21) Application number: 17194170.1

(22) Date of filing: 29.09.2017

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(71) Applicant: **Intel Corporation**
**Santa Clara, CA 95054 (US)**

(72) Inventors:
• **RAVGAD, Segev**
  **69413 Tel Aviv (IL)**

• **ABIRI, Roni**
  **4372807 Raanana (IL)**
• **ALPERT, Yaron**
  **Hod Hasharon 4533909 (IL)**
• **RAMASUBRAMANIAN, Haribalaraman**
  **560035 Bangalore (IN)**

(74) Representative: **Lambsdorff & Lange**
**Patentanwälte**
**Partnerschaft mbB**
**Grillparzerstraße 12A**
**81675 München (DE)**

(54) **TECHNIQUES FOR CONTROLLING COMMUNICATION NETWORKS**

(57)     This disclosure relates to a serving entities control entity for controlling a communication network comprised of a plurality of communication clients which are connectable via a plurality of serving entities, the serving entities control entity comprising: a traffic monitor, configured to monitor data traffic of at least one transmission queue of each serving entity of the plurality of serving entities; and a serving entities controller, configured to allocate resources to each serving entity of the plurality of serving entities based on the monitored data traffic and according to quality of service requirements of each of the communication clients.

Fig. 2

EP 3 462 794 A1

## Description

## FIELD

The disclosure relates to techniques for controlling communication networks, in particular self-organized networks (SONs). The disclosure particularly relates to devices and methods for managing self-organized WLAN (wireless LAN) networks having a multi-layered architecture comprising Central serving device entity (e.g. access points (APs), second level serving devices (e.g range extenders (REs) and communication clients, i.e. stations (STAs).

## BACKGROUND

In wireless communication networks such as WLAN networks according to WiFi standardization (e.g. for the new standard IEEE 802.11ax) improvements are achieved over previous standards (e.g. according to IEEE 802.11ac). These improvements are targeted towards a better utilization of the spectrum, movement towards a centralized management system compared to the distributed decision in previous standards. However, this management capability is limited only for traditional point-to-multipoint network configuration (star topology). Other multilayer topologies, such as Range Extenders (REs), multi-band access points (APs), tethered devices etc. are not supported explicitly.

Hence, a relevant aspect of the disclosure is to improve wireless communication networks to support multi-layered multi - serving nodes network topologies. In particular, a relevant aspect of the disclosure is to improve resource allocation and synchronization of existing communication networks, in particular IEEE 802.11ac as well emerging 802.11ax networks, to support multi-layered multi - serving nodes synchronized topologies.

## BRIEF DESCRIPTION OF THE DRAWINGS

The accompanying drawings are included to provide a further understanding of embodiments and are incorporated in and constitute a part of this specification. The drawings illustrate embodiments and together with the description serve to explain principles of embodiments. Other embodiments and many of the intended advantages of embodiments will be readily appreciated as they become better understood by reference to the following detailed description.

Fig. 1 is a schematic diagram illustrating a multi-layered wireless multi - serving nodes communication network 100 according to an exemplary aspect of the present disclosure.

Fig. 2 is a schematic diagram illustrating a multi-layered wireless communication network 200 with gateway, range extenders and clients according to an exemplary aspect of the present disclosure.

Fig. 3 is a schematic diagram illustrating a multi-layered wireless communication network 300 with connectivity entities and clients according to an exemplary aspect of the present disclosure.

Fig. 4 is a schematic diagram illustrating time synchronization 400 for a multi-layered wireless communication network according to an exemplary aspect of the present disclosure.

Fig. 5 is a schematic diagram 500 illustrating different schemes of color coding.

Fig. 6a is a schematic time-frequency diagram illustrating Downlink resources allocation according to an exemplary aspect of the present disclosure.

Fig. 6b is a schematic time-frequency diagram illustrating Uplink resources allocation according to an exemplary aspect of the present disclosure.

Fig. 7 is a schematic diagram illustrating an exemplary resources allocation signaling format 700 according to an exemplary aspect of the present disclosure.

Fig. 8 is a block diagram of an exemplary control entity 800 for controlling a communication network according to an exemplary aspect of the present disclosure.

## DETAILED DESCRIPTION

In the following detailed description, reference is made to the accompanying drawings, which form a part thereof, and in which is shown by way of illustration specific aspects in which the invention may be practiced. It is understood that other aspects may be utilized and structural or logical changes may be made without departing from the scope of the present invention. The following detailed description, therefore, is not to be taken in a limiting sense, and the scope of the present invention is defined by the appended claims.

The following terms, abbreviations and notations will be used herein:

| | |
|---|---|
| SON: | Self-Organized Network |
| SDN: | Software Defined Networking |
| RE: | Range Extender / second level serving devices |
| AP: | Access Point/ Central serving device entity |
| GW: | Gateway |
| STA: | station, communication client |
| L2: | Layer 2, data link layer |
| MAC: | media access control, part of Layer 2 |
| PHY: | physical layer, Layer 1 |

E2E: end-to-end
QoS: Quality of Service
EDCF: Enhanced Distributed Coordination Function
SYNC: Synchronization
BSS: Basic Service Set ,i.e. serving devices
CC: Color Code
TF: Trigger Frame
UL: Uplink
DL: Downlink
KPI: Key Performance Indicator

It is understood that comments made in connection with a described method may also hold true for a corresponding device configured to perform the method and vice versa. For example, if a specific method step is described, a corresponding device may include a unit to perform the described method step, even if such a unit is not explicitly described or illustrated in the figures. Further, it is understood that the features of the various exemplary aspects described herein may be combined with each other, unless specifically noted otherwise.

The techniques described herein may be implemented in wireless and combined wired/wireless multi - serving nodes communication networks, in particular communication networks based on high speed communication standards from the 802.11 family according to the Wi-Fi alliance, e.g. IEEE 802.11ac, IEEE 802. 11ad, IEEE 802.11ah, IEEE 802.11ay, IEEE 802.11ax and successor standards. The methods are also applicable for mobile communication standards such as LTE, in particular LTE-A and/or OFDM and successor standards such as 5G. The methods and devices described below may be implemented in network entities such as Central serving device entity (e.g. access points (APs), gateways and second level serving devices (i.e. range extenders (REs). The methods and devices described below may also be implemented in electronic devices such as cellular handsets, mobile or wireless devices (or mobile stations or User Equipment (UE) or communication clients such as stations (STAs)). The described devices may include integrated circuits and/or passives and may be manufactured according to various technologies. For example, the circuits may be designed as logic integrated circuits, analog integrated circuits, mixed signal integrated circuits, optical circuits, memory circuits and/or integrated passives.

Methods and devices described hereinafter are based on wireless communication networks, in particular WLAN and Wi-Fi Self-Organized networks (SON) deployments. As part of the new WLAN Self-Organized Networks (SON) deployments, more and more Wi-Fi networks add second level serving devices (i.e Range Extenders (RE) to existing Access Points infrastructure for increased coverage and service. These second level serving devices (e.g. RE)s may use Wi-Fi technology for both backhaul connection and service, or only for service segment, adding a load on spectral resources. Backhaul traffic as described hereinafter refers to traffic between serving devices and service traffic and traffic between serving devices and end point devices. In cases where spectrum is scarce or high interference conditions exist, the allocation of transmit opportunities as dictated by the existing CSMA/CA mechanism fails to meet fairness criteria. This causes to devices, served by RE to have worse condition compared to the devices that are directly connected to the central serving device entity (e.g. AP). Aspects of the disclosure as described below provide mechanisms to install fairness criteria end to end, for both devices, i.e. devices directly connected to the central serving device entity (e.g. AP) as well as devices served by second level serving devices (e.g. RE)s.

Legacy (e.g. IEEE 802.11n, IEEE 802.11ac) Wi-Fi air access is based on CSMA/CA which allows reasonable air access fairness, however this is correct only for a system that consists of same type of devices. When REs are added to these networks, they aggregate traffic needs of several devices into a single pseudo client device that has the same probability of granted access as each of the other directly connected devices, so based on "coloring" of this traffic the proportional resources can be allocated to these devices for both downlink and uplink traffic. Methods and devices according to the disclosure present a solution for making 802.11 based networks, comprising central serving device entity (e.g. AP)s and REs, to collectively work together in order to accomplish fair, efficient, uniform adequate and efficient WLAN based services. The presented solution is agnostic to the specific 802.11 standard in use, as such it both supports legacy networks and as well emerging technologies.

Aspects of the disclosure address a new method for utilizing the new 802.11ax capabilities such as synchronization, color codes and Layer 2 resource allocation, etc. to support multilayer SON/SDN network configurations. The methods presented below are fully complying with the standard base-line.

Aspects of the disclosure as described below introduce a standards-compliant method for using IEEE 802.11ax synchronized mode of operation for supporting WLAN 802.11ax based SON (self-organized Networks) network, in particular synchronized network that implements multiple layers second level serving devices (i.e. Range Extenders (RE) deployments. The method enables an encore / Central serving device entity (e.g. a main AP or GW or one of the REs or cloud based service) to balance and optimize a multi-layered WLAN network by sending synchronizing information, defining transmission formant and allocating L2 resources, air-access parameters and routing (for both Downlink and Uplink). The information is distributed either directly or indirectly via wireless/wired control plane to coordinate a set of connectivity entities (e.g. AP, RE, etc.). The new capabilities of 802.11ax synchronized mode of operation may be used including: L2 resource allocation, air-access parameters and routing, color coding, timing synchronization for optimizing overall KPIs of a multi-layered SON/SDN WLAN system. This solution offers a better utilization of spectral resources through prevention of air collisions, thus supplying higher bit-rate with less re-transmissions. The solution adds the support of more complicated topologies, not limiting implementation only to star configuration.

Aspects of the disclosure as described below present an IEEE 802.11 standards-compliant implementation method for operating a WLAN SON 802.11 network, in particular, a network implementing multiple layers RE deployment, which is based on layer 2 load balancing air-access. The method enables an encore entity, also denoted as control entity hereinafter (e.g. a main AP or GW or one of the REs) to control the air load of each sub-network by allocating resources (for both Downlink and Uplink). The method is based on the temporal sub-network / SON load, dynamically change EDCF function per entity. The control signaling may be sent either directly or indirectly via wireless / wired control plane to coordinate a set of connectivity entities (e.g. AP, RE, etc.) by indicating resources allocation (e.g. operation modes, timing, etc.). The resources allocation / dynamic routing may be further improved by adding accurate timing synchronization to the network. As the encore entity, i.e. control entity monitors all traffic needs of all devices whether connected directly or indirectly, the connectivity entity marks the relevant traffic by dividing it into different local transmission L2 queues as described below. These L2 queues are mapped into different resource allocation / EDCF criteria, enabling optimization of these queues. Queues can be managed and scheduled separately in real time, to achieve the required service fairness to all client devices.

Aspects of the disclosure as described below add an air-access based traffic fairness function and the required signaling to a system of APs/REs, thus maintaining and improving all users experience across the system network. Provisions of setting E2E QoS (e.g. bit-rate, delay) can be added for selected services. The solution described below provides Layer 2 load balancing and L2 re-routing between service and backhaul traffic requirements as they share same spectral resources, and prioritizing backhaul traffic per need. Aspects of the disclosure as described below provide network-wise load balancing across all permissible wireless channels, for specific network as well as for neighboring networks through management in the cloud. Thus, an improved response time, addressing the dynamic nature of IP traffic over varying wireless channels can be achieved.

In the following, embodiments are described with reference to the drawings, wherein like reference numerals are generally utilized to refer to like elements throughout. In the following description, for purposes of explanation, numerous specific details are set forth in order to provide a thorough understanding of one or more aspects of embodiments. However, it may be evident to a person skilled in the art that one or more aspects of the embodiments may be practiced with a lesser degree of these specific details. The following description is therefore not to be taken in a limiting sense.

The various aspects summarized may be embodied in various forms. The following description shows by way of illustration various combinations and configurations in which the aspects may be practiced. It is understood that the described aspects and/or embodiments are merely examples, and that other aspects and/or embodiments may be utilized and structural and functional modifications may be made without departing from the scope of the present disclosure.

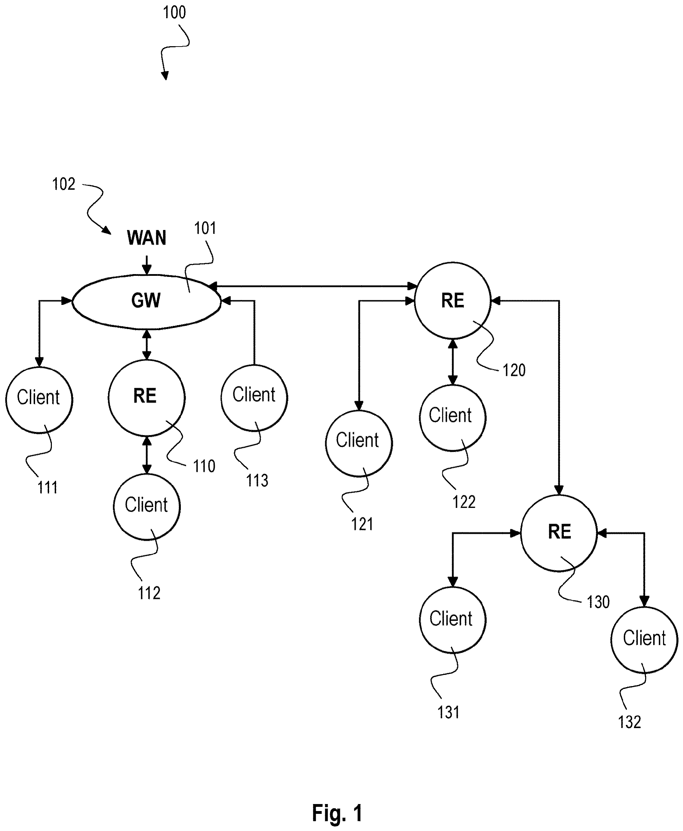

Fig. 1 is a schematic diagram illustrating a multi-layered wireless communication network 100 according to an exemplary aspect of the present disclosure.

The communication network (or communication system) 100 can include a wide-area network (WAN) 102, one or more gateways (GW) 101 (also referred to as access points (APs)), one or more range extenders (RE) 110, 120, 130, also referred to as intelligent range extenders (IRE), and one or more clients 111, 112, 113, 121, 122, 131, 132. Clients 111, 112, 113, 121, 122, 131, 132 can also be referred to as stations or mobile devices. In exemplary aspects, the components of the network 100 can operate based on a master-slave relationship. For example, the RE 130 can be a slave to the RE 120. The RE 120 can also be a slave to the GW 101 operating as a master.

Examples of a client include (but are not limited to) a mobile computing device such as a set top-box, USB dongle communication device, strimmer, gaming box, IOT device, wireless sensor, laptop computer, a tablet computer, a mobile telephone or smartphone, a personal digital assistant (PDA), and mobile media player; Internet-of-Things (IOT) devices, and a wearable computing device such as a computerized wrist watch or "smart" watch, and computerized eyeglasses. In some aspects of the present disclosure, the client 111, 112, 113, 121, 122, 131, 132 may be a stationary communication device, including, for example, a stationary computing device such as a personal computer (PC), a desktop computer or a computer terminal.

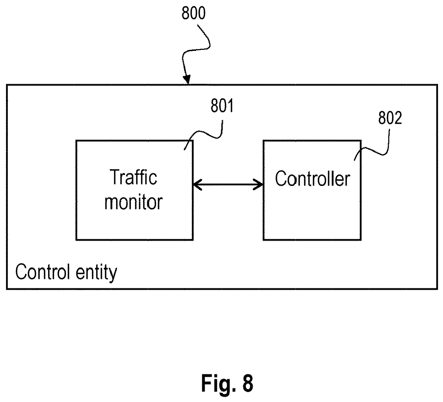

A control entity, e.g. a control entity 800 as described below with respect to Fig. 8, also referred to as communication manager or also referred to as encore entity, can be implemented within the WAN 102, the gateway 101, or an RE 110, 120, 130. For example, the control entity can be implemented in a single component of the system 100, such as in the gateway 101 or as a component of the backhaul network of the WAN 102 and connected to the GW 101, REs 110, 120, 130 and clients 111, 112, 113, 121, 122, 131, 132 via the WAN 102. In this example, the control entity can be, for example, hosted within the backhaul network as a cloud computing device. The GW 101 (or central serving device entity (e.g. AP) and the RE 110, 120, 130 can each be generally referred to as a communication station. In an alternative exemplary aspect, the control entity is a distributed device and is included in multiple components across the system 100 but configured to function as a single control entity. For example, the processing performed by the control entity can be distributed among two or more of the components of the system 100.

The communication clients or clients 111, 112, 113, 121, 122, 131, 132 can be configured to perform one or more measurements for one or more wireless characteristics. Based on the measurement(s), the client can determine an appropriate access point (or other serving device / serving node).

The control entity may be configured to manage and control which gateway (GW), or range extenders (RE) is to serve one or more wireless clients 111, 112, 113, 121, 122, 131, 132 of the wireless communication system 100. The gateway 101 can also be referred to as an Central serving device entity (e.g. access point (AP). The control entity can be configured to perform a centralized management and optimization of some or all nodes (GW, IRE) including the communication backhaul. The control entity can be configured to perform real-time mobility management and/or load balancing of the wireless clients based on a global (complete) analysis of the wireless communication system 100. The control entity can utilize multiple frequency bands (e.g., 2.4 GHz, 5 GHz) for backhaul and service of clients.

The control entity can be configured to receive clients and other measurements information from the access points (gateway) 101 and the REs 110, 120, 130 and provide management packets to the access points (gateway) 101 and the REs 110, 120, 130. The control entity can use a secured in-band signaling protocol between the access points (gateway 101) and the REs 110, 120, 130 to exchange the measurement information and management packets.

In addition to the central serving device entity (e.g. AP) or RE serving the wireless client, the control entity can be configured to control one or more (e.g., all) other central serving device entity (e.g. AP)s and REs 110, 120, 130 to measure wireless characteristics (e.g., path loss) between the wireless client and/or obtain wireless characteristics (e.g., path loss/signal strength measurements) from the wireless client 111, 112, 113, 121, 122, 131, 132. Using the signaling protocol, the control entity can control the central serving device entity (e.g. AP)/RE to instruct the wireless client 111, 112, 113, 121, 122, 131, 132 to transmit (so as to measure the path loss, signal strength, etc.) and instruct one or more other central serving device entity (e.g. AP)s and/or REs to listen for the transmission from the wireless client 111, 112, 113, 121, 122, 131, 132 to also measure the path loss, signal strength, etc. In an exemplary aspect, the control entity and the central serving device entity (e.g. AP)s and/or second level serving devices (e.g. RE)s of the communication system 100 can use request-to-send (RTS)/Clear-to-send (CTS) flow control procedures.

For example, the measurement of wireless characteristics (e.g., path loss, signal strength, etc.) can be obtained not only by the serving central serving device entity (e.g. AP)/RE but also by all other central serving device entity (e.g. AP)s/REs in the communication system. In an exemplary aspect, this is carried by sending a time synchronized management packet from the serving central serving device entity (e.g. AP)/second level serving devices (e.g. RE) to each device being served, and setting all other stations (other central serving device entity (e.g. AP)s/second level serving devices (e.g. RE)s) to listen for the respective transmissions of the served device(s). In this example, all central serving device entity (e.g. AP)/ second level serving devices can be time synchronized, move to the channel the client uses to measure the path loss. The central serving device entity (e.g. AP)/second level serving devices (e.g. RE) can operate in a dedicated listen only mode where no beacons are transmitted. This operation can be coupled with the RF subsystem of the second level serving devices (e.g. RE) to support switching of the scanned channel from the served one to the scanned one (e.g., to enable concurrent 5GHz operation and a scanning mode).

In an exemplary aspect, the backhaul communication network (and in some aspects, the WAN 102) can include one or more well-known communication components-such as one or more network switches, one or more network gateways, and/or one or more servers. The backhaul communication network can include one or more devices and/or components configured to exchange data with one or more other devices and/or components via one or more wired and/or wireless communications protocols.

In exemplary aspects, the gateway 101, REs 110, 120, 130, and clients 111, 112, 113, 121, 122, 131, 132 communicate with one or more service providers via the WAN 102 and the backhaul communication network. In an exemplary aspect, the backhaul communication network is an internet protocol (IP) backhaul network, but is not limited thereto. The number of gateways 101, second level serving devices (e.g. RE)s 110, 120, 130, and clients 111, 112, 113, 121, 122, 131, 132 are not limited to the quantities illustrated in FIG. 1, and the system 100 can include any number of the various components as would be understood by one of ordinary skill in the relevant art(s). For example, the system 100 can include another GW 101 connected to the WAN 102 and that serves one or more other REs 110, 120, 130 and/or clients 111, 112, 113, 121, 122, 131, 132.

The GWs 101, second level serving devices (e.g. RE)s 110, 120, 130, and clients 111, 112, 113, 121, 122, 131, 132 can each include one or more transceivers configured to transmit and/or receive communications via one or more wireless and/or wired technologies within the communication system 100. In an exemplary aspect, the GWs 101, second level serving devices (e.g. RE)s 110, 120, 130 and clients 111, 112, 113, 121, 122, 131, 132 are configured to wireless communicate using one or more protocols defined in Institute of Electrical and Electronics Engineers' (IEEE) 802.11 specification, such as IEEE 802.11ac or IEEE 802.11ax, but is not limited thereto. The GWs 101, second level serving devices 110, 120, 130 and clients 111, 112, 113, 121, 122, 131, 132 can be configured to communicate using one or more frequency bands, including, for example, 800 MHz, 2.4 GHz, 6 GHz , 45 GHz, 60 GHz and 5 GHz. The GWs 101, second level serving devices (e.g. RE)s 110, 120, 130 and clients 111, 112, 113, 121, 122, 131, 132 can additionally or alternatively be configured to communicate using one or more wired communication technologies, such as Ethernet (IEEE 802.3), Power-line communications (PLC), Multimedia over Coax Alliance (MoCA), and/or fiber optic, but are not limited thereto. For example, an second level serving devices (e.g. RE) 110, 120, 130 can communicate with the GW 101 or another RE 110, 120, 130 via one or more wired or other wireless communication protocols while wirelessly serving one or more clients 111, 112, 113, 121, 122, 131, 132. That is, the backhaul of the RE 110, 120, 130 can be wired while the serving side is wireless. Alternatively, both the backhaul and the serving side can be wireless for example.

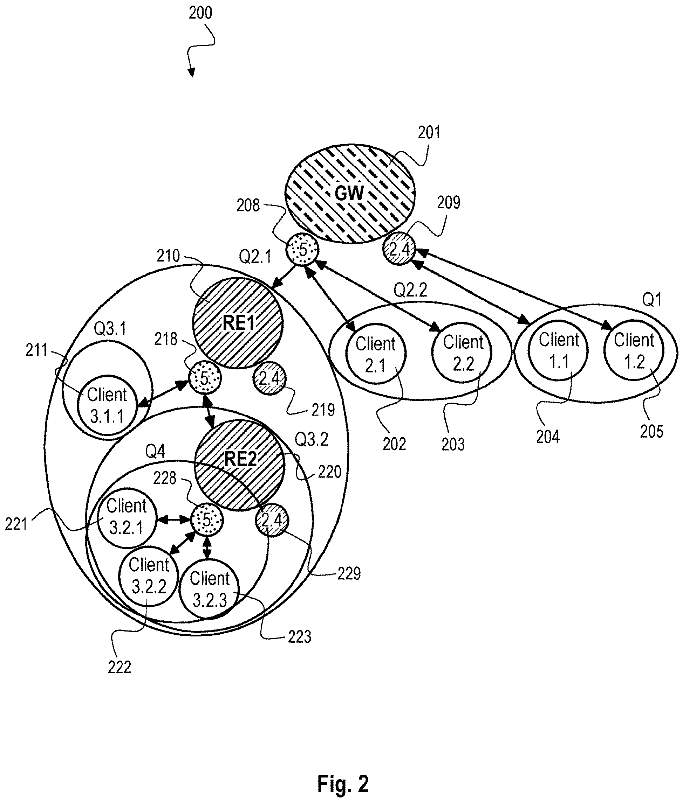

Fig. 2 is a schematic diagram illustrating a multi-layered wireless communication network 200 with gateway, range extenders and clients according to an exemplary aspect of the present disclosure. The multi-layered wireless communication network 200 has a similar network topology as the communication network 100 described above with respect to Fig. 1. The network elements may have the same functionalities as described above with respect to Fig. 1.

The multi-layered wireless communication network 200 represents an IEEE 802.11 standards compliant implementation of a WLAN SON 802.11 based network, in particular a network that involves multiple layers of second level serving devices (e.g. RE) deployment.

The multi-layered wireless communication network 200 includes connectivity entities, i.e. AP or GW 201 and second level serving devices, 210, 220 that can be either co-located with a Gateway 201 or in a remote server and client devices 202, 203, 204, 205, 211, 221, 222, 223, that are connected either directly to the connectivity entities 201, 210, 220 or via one or more second level serving devices s 210, 220.

In this exemplary implementation of the network as shown in Fig. 2, the GW 201 can be accessed via two communication channels, a first channel 208 based on 5 GHz band and a second channel 209 based on 2.4 GHz band. Note that this is an example that is not limited to 2.4 and 5 GHz band operation. Client 1.1, 204 and client 1.2, 205 are connectable to the second channel 209 while client 2.1, 202 and client 2.2, 203 together with second level serving devices 1, 210 are connectable to the first channel 208. Similarly, RE1, 210 can be accessed via two communication channels, a first channel 218 based on 5 GHz band and a second channel 219 based on 2.4 GHz band. Client 3.1.1, 211 together with RE2, 220 are connectable to the first channel 218. Also similarly, RE2, 220 can be accessed via two communication channels, a first channel 228 based on 5 GHz band and a second channel 229 based on 2.4 GHz band. Client 3.2.1, 221, Client 3.2.2, 222 and Client 3.2.3, 223 are connectable to the first channel 228.

Client 1.1, 204 and client 1.2, 205 form a first subnetwork Q1 that is connectable via communication channel 209 to the GW 201. Client 2.1, 202 and client 2.2, 203 form a second subnetwork Q2.2 that is connectable via communication channel 208 to the GW 201. RE1, 210 together with its associated clients 211, 221, 222, 223 and RE2 form a third subnetwork Q2.1 that is connectable via communication channel 208 to the GW 201. Client 3.1.1, 211 forms a fourth subnetwork Q3.1 that is connectable via communication channel 218 to RE1, 210. RE2, 220 together with its associated clients 221, 222, 223 forms a fifth subnetwork Q3.2 that is connectable via communication channel 218 to RE1, 210. Clients 3.2.1, 221, 3.2.2, 222 and 3.2.3, 223 form a sixth subnetwork Q4 that is connectable via communication channel 228 to RE2, 220.

In the following, a method for controlling and/or managing the multi-layered wireless communication network 200 is described that may be implemented in a control entity, e.g. a control entity 800 described below with respect to Fig. 8.

In the initial stage, a routing topology is formed connecting all clients 202, 203, 204, 205, 211, 221, 222, 223 and REs 210, 220 to the GW 201. The initial routing and channels are determined based on radio frequency (RF) characteristics (e.g. path loss, interference).

Based on traffic and QoS requirements of each of the clients 202, 203, 204, 205, 211, 221, 222, 223, routing and channel assignment is optimized. For example, the traffic of client 3.2.1, 221 assigned to RE2, 220 due to better radio performance, passes 3 wireless links to the GW 201, meaning it may consume 3x air resources. It may be that connecting it via RE1, 210 with a higher path loss is more spectral effective. An example of key function determining the optimal backhaul is the allocation of resources by optimizing the total air-time resource required by each client passing through K REs is given by the following equation:

$$Air\_time = \sum_{i=1}^{K+1} Air\_time_i \, .$$ For each RE 210, 220, calculation for the aggregated traffic and resulting air-time resource usage is repeated. These calculations may be performed per the available channels in both 2.4 and 5 GHz bands, taking into account the relevant regulatory requirements as well the different bandwidth (BW), and load of neighboring systems.

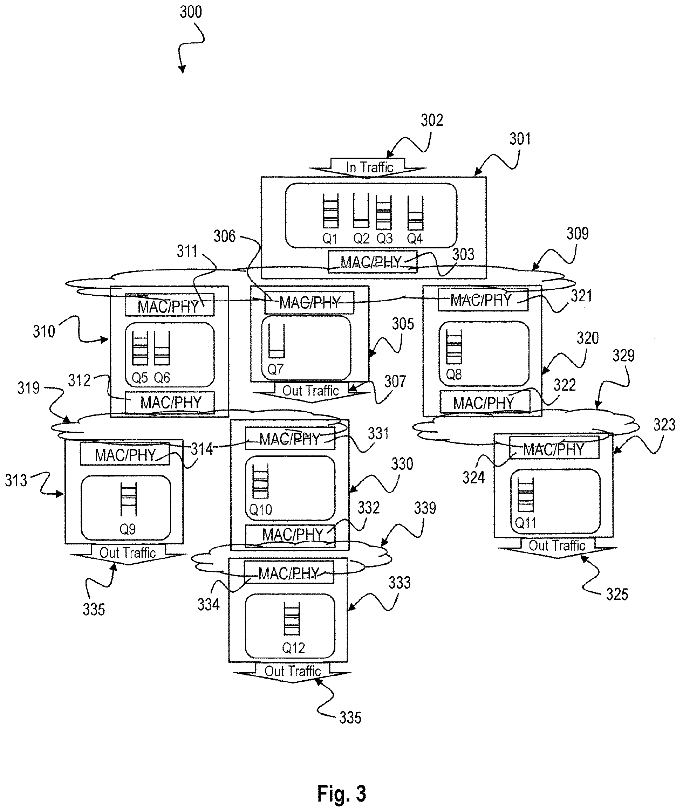

If no action is taken, clients 2.1, 2.2 and RE1 have the same fairness accessing the GW 201, although RE1 represents 2 clients and RE2 represents 4 clients. To compensate this imbalance, the GW 201 and REs 210, 220 may divide the traffic into separate queues, e.g. as described below with respect to Fig. 3. This enables a fair load balancing across all clients 202, 203, 204, 205, 211, 221, 222 and 223 regardless to their connection topology. In 11n, ac we do so by ordering the L2 queues, and potentially changing the routing. In 11ax we use this information when allocating radio resources.

When two or more channels are available they can be used to isolate the traffic between the layers. For example GW 201 to client 1.1, 204 and client 1.2, 205 may use channel 209 in the 2.4GHz band, RE1, 210 and client 2.1, 202, client 2.2, 203 may use channel 208 in 5GHz band etc. When only a single channel is available, for example when DFS channels are disabled, all connections are competing with each other, and in addition they may suffer from hidden node phenomena, the solution here is to use the suggested queueing system to trim traffic so collisions can be minimized. This is feasible as the control entity (encore entity) in the GW 201 is aware of the traffic characteristics of all clients 202, 203, 204, 205, 211, 221, 222, 223, whether connected directly or not.

Each system (e.g. GW 201 and RE 210, 220) in the topology models a L2 queue hierarchy at each of the egress interfaces, Wi-Fi in the case of REs 210, 220 and WAN (e.g. DSL, GPON, Ethernet and LTE) in the case of GW 201, with the intent to control the in and out flow rates of those L2 per TID/AC queues in real time. A combination of strict priority (e.g. for high priority traffic like Video) and Weighted Fair L2 Queueing (e.g. for non-high priority traffic like internet browsing data) scheduler algorithms can be attached to the L2 queues to ensure appropriate resource allocation by balance between service prioritization and fairness. The control entity or encore entity (GW) can understand the topology and the real time traffic situation and can manage the dynamic configuration of the L2 queues.

By virtue of modelling the system end-to-end, service prioritization, appropriate resource allocation and fairness is guaranteed for both external (e.g., STA to Internet) and internal traffic (e.g., STA to other STA).

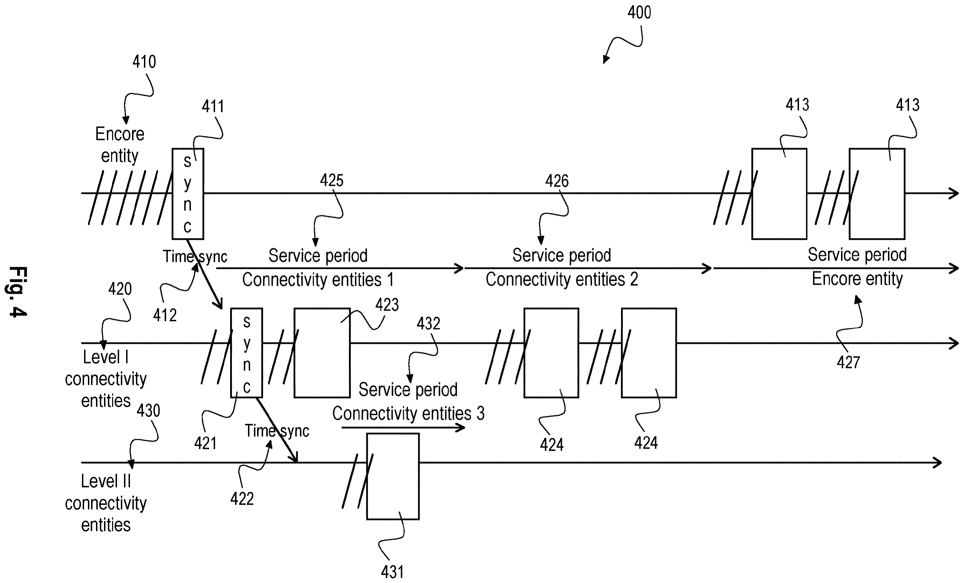

Signaling and timing synchronization of the multi-layered wireless communication network 200 can be performed as described below with respect to Fig. 4.

Fig. 3 is a schematic diagram illustrating a multi-layered wireless communication network 300 with connectivity entities and clients according to an exemplary aspect of the present disclosure.

The multi-layered wireless communication network 300 has a similar network topology as the multi-layered wireless communication network 200 described above with respect to Fig. 2 or as the communication network 100 described above with respect to Fig. 1. The network elements may have the same functionalities as described above with respect to Figs. 1 and 2. The multi-layered wireless communication network 300 represents an IEEE 802.11 standards compliant implementation of a WLAN SON 802.11 based network, in particular a network that involves multiple layers of RE deployment.

The multi-layered wireless communication network 300 is hierarchically structured with an exemplary number of four hierarchy levels as shown in Fig. 3. A first connectivity entity 301, e.g. a GW 201 as described in Fig. 2 is positioned on a first hierarchy level. On a second hierarchy level, other connectivity entities 310, 320, e.g. REs 210, 220 as described in Fig. 2, and clients 305 are connectable via a first subnetwork 309 to the first connectivity entity 301. On a third hierarchy level, client 313 and connectivity entity 330 are connectable via a second subnetwork 319 to connectivity entity 310. On this third hierarchy level, client 323 is connectable via a third subnetwork 329 to connectivity entity 320. On a fourth hierarchy level, client 333 is connectable via a fourth subnetwork 339 to connectivity entity 330.

Data traffic passes as in-traffic 302 into the multi-layered wireless communication network 300 and is divided into a specific number of transmission queues Q1, Q2, Q3, Q4 in the first connectivity entity 301 and distributed via the MAC/PHY layer 303 into the further network entities. For example, connectivity entity 310 receives ingress data traffic via MAC/PHY layer 303, processes it in transmission queues Q5, Q6 and forwards egress data traffic via MAC/PHY layer 312. For example, client 305 receives ingress data traffic via MAC/PHY layer 306, processes it in transmission queue Q7 and outputs out traffic 307. For example, connectivity entity 320 receives ingress data traffic via MAC/PHY layer 321, processes it in transmission queue Q8 and forwards egress data traffic via MAC/PHY layer 322. For example, client 313 receives ingress data traffic via MAC/PHY layer 314, processes it in transmission queue Q9 and outputs out traffic 315. For example, connectivity entity 330 receives ingress data traffic via MAC/PHY layer 331, processes it in transmission queue Q10 and forwards egress data traffic via MAC/PHY layer 332. For example, client 323 receives ingress data traffic via MAC/PHY layer 324, processes it in transmission queue Q11 and outputs out traffic 325. For example, client 333 receives ingress data traffic via MAC/PHY layer 334, processes it in transmission queue Q12 and outputs out traffic 335.

In an exemplary implementation, transmission queues Q1, Q2, Q3, Q4 in the first connectivity entity 301 may distribute data traffic according to their traffic classes, e.g. voice traffic in Q1, video traffic in Q2, best effort data traffic in Q3 and background traffic in Q4.

Fig. 4 is a schematic diagram illustrating time synchronization 400 for a multi-layered wireless communication network according to an exemplary aspect of the present disclosure.

The time synchronization 400 is structured for a hierarchical multi-layered network, e.g. a multi-layered wireless communication network 200, 300 as described above with respect to Figures 2 and 3. A first hierarchy level is formed by an encore entity 401, e.g. a control entity 800 as described below with respect to Fig. 8, which may be implemented in a GW, e.g. a GW 101, 201, 301 as described above with respect to Figures 1 to 3. A second hierarchy level is formed by level I connectivity entities 420, e.g. second level serving devices (e.g. REs) or central serving device entity (e.g. AP)s as described above with respect to Figs. 2 and 3. A third hierarchy level is formed by level II connectivity entities 430, e.g. REs or central serving device entity (e.g. AP)s as described above with respect to Figs. 2 and 3.

The time synchronization and multi-level resource allocation 400 shown in Fig. 4 provides an IEEE 802.11 standards compliant multi-level over the air timing synchronization coordination between the serving devices entities and the devices that are connected either directly (over the air) or indirectly (can receive the sync info) and/or to other serving devices entities or via one or more RE.

The example over the air time synchronization scheme 400 in Fig. 4 has multi-level over-the-air timing synchronization and resource allocation (service period for example) that used the 802.11 EDCF air access methodology (e.g. as described above with respect to Figure 2 and 3). In this example resource allocation and time synchronization scheme 400 the encore entity 410 conducts timing synchronization and allocates service period 425, 426 RU allocation and transmission format for the next level of the network (devices 420 that are connected directly to the encore entity 410) using dedicated SYNC signaling 411 transmitted at the operating frequency. Every serving devices entities can also conduct timing synchronization and allocate service period RU allocation and transmission format for their next level network. For example level I serving devices entities 420 can conduct timing synchronization 421 for level II connectivity entities 430 and allocate service period 432 RU allocation and transmission format. The time synchronization resource allocation and scheme 400 can be further improved using accurate resource allocation and timing synchronization conducted between the operating entities prior to the final resource allocation and timing synchronization (sending the SYNC).

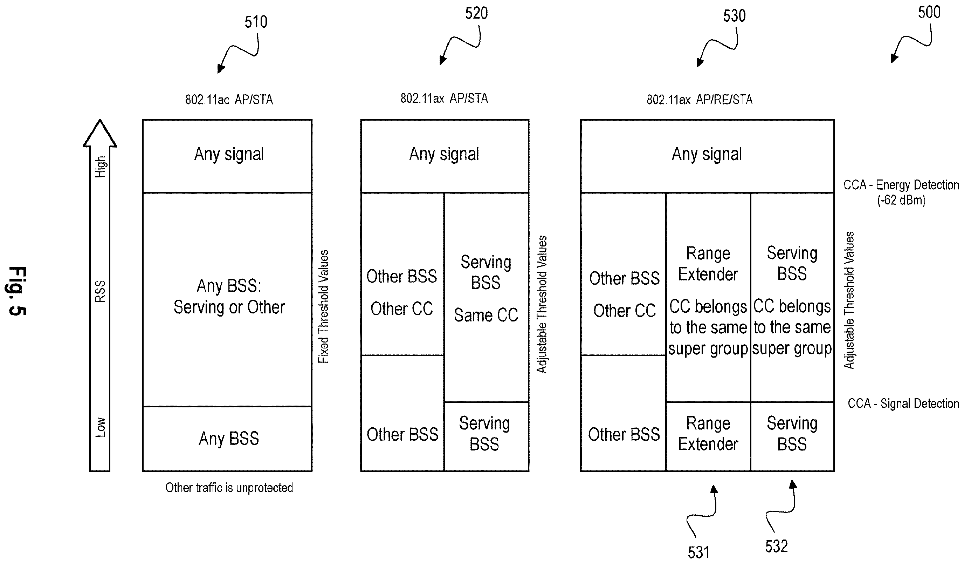

Fig. 5 is a schematic diagram 500 illustrating different schemes of marking the multi-level network entities using color coding allocation scheme The left section 510 of diagram 500 depicts detection in 802.11ac AP/STA networks without using color coding. A fixed power threshold value can be applied to detect any serving devices (low power), any serving devices: Serving or Other (medium power) and any signal (high power).

The middle section 520 of diagram 500 depicts color coding resource allocation scheme in 802.11ax AP/STA networks. Based on color coding resource allocation scheme, different thresholds for detecting serving devices can be applied. In the right section a first power threshold can be applied to differentiate between serving devices of same color code and serving devices. In the left section a second power threshold can be applied to differentiate between other serving devices of other color code (CC) and other serving devices. The same color code indicates the own serving devices (basic service set) while another color code indicates another serving devices unequal to the own serving devices.

IEEE 802.11ax specifies 6 bits for serving devices color coding (i.e. 63 options) allocation signaling. Each serving devices can be assigned with a different color code. STA, based on detected color code, may determine whether packet is coming from intra-serving devices or inter-serving devices, use different threshold color code values for these 2 cases to improve system performance by (1) minimizing hidden node for Intra-serving devices traffic, and (2) continue working in the presence of low received signal coming from Inter-serving devices. The middle section 520 shows how using two threshold values, enables including all wanted (same color code) devices while excluding unwanted inter-serving devices.

When STA detects a transmission with a different color code it may switch to power save mode during that transmission as it is not targeted for it. Hence it can save power especially for dense mixed environments. In the middle section 520, 802.11ax defines only two states depending if color code is identical or not.

The right section 530 of diagram 500 depicts color coding resource allocation scheme in 802.11ax AP/RE/STA networks, e.g. multi-layered wireless communication networks 200, 300 as shown in Figures 2 and 3. With respect to the middle section 520 color coding allocation scheme is refined. Based on color coding allocation scheme, a first section 531 and a second section 532 of the same super group associated with a station can be detected which differentiate between range extender and serving devices.

The right section 530 of diagram 500 illustrates an extension of the 11ax defined color codes allocation scheme to support hierarchical color scheme allocation scheme that reflects a multi-layered network topology, e.g. as described above with respect to Figures 1 to 3. The color coding allocation scheme indication is split to 2 sections 531, 532. The first section 531 reflects the higher layer that the second level serving devices is connected to the centralized entity. The second section 532 assigns a unique color to each of the serving devices/ Group or serving devices. For example, the 6 bits of color code can be divided into 2 groups of 3 bits each, where the MSB bits define the first hierarchy and the LSB bits define the second hierarchy. As the central entity (e.g. control entity 800 described below with respect to Fig. 8) controls all other entities in the system, it may set the per-entity color code allocation scheme. Same method may be applied for Wi-Fi direct links that are co-located geographically and belong to the same network owner. For example, in the case of Wi-Fi docking in enterprise where these pairs, although not part of the served central serving device entity (e.g. AP) will be identified as those that belong to the same entity, and will be assigned with the low threshold value. Once assigned with color codes allocation, serving devices will change their threshold and power settings according to the information in the color code allocation. This will help avoiding intra-system collisions while simultaneously supporting the advance power save mode defined in 802.11ax (if all devices share same color code 802.11ax power save benefit can't be applied). Section 530 of diagram 500 shows how adding granularity to the color codes aids collision avoidance when second level serving devices s are implemented.

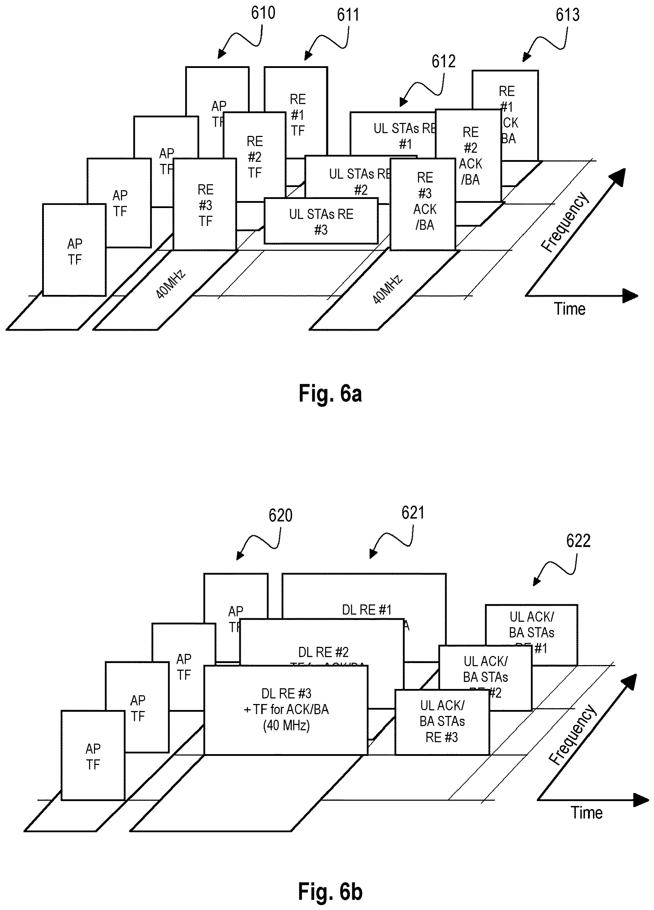

Figure 6(a and b) is related to Figure 4; it illustrates the multi layers resources allocation at the frequency 9RUs) domain. Fig. 6a is a schematic time-frequency diagram illustrating Downlink multi layers resources allocation while Fig. 6b is a schematic time-frequency diagram illustrating Uplink multi layers resources allocation. In Fig. 6a a first section 610 indicated central serving device (for example AP) initiate trigger frame (TF), a second section 611 indicates odder second level serving device (for example RE) initiate TF, a third section 612 indicates UL STAs RE and a fourth section 613 indicates second level serving devices (e.g. RE) ACK/BA for different REs #1, #2 and #3. In Fig. 6b a first section 620 indicated central serving device entity (e.g. AP) trigger frame (TF), a second section 621 indicates DL RE and TF for ACK/BA and a third section 622 indicates UL ACK/BA for the different REs #1, #2 and #3.

Resources allocation shown in Figures 6a and 6b may be applied to a system that consists of multi layers serving device entities (e.g. central serving device entity (e.g AP), RE, etc.), e.g. a multi-layered wireless communication network 200, 300 as described above with respect to Figures 2 and 3, that can be either co-located with a gateway or in a remote server, and client devices that are connected in a synchronized way, either directly to the connectivity entities or via one or more second level serving device. All connectivity entities may be connected between themselves in a synchronized mode as well. The L2 resource allocation, air-access parameters and routing and timing may be conducted by temporary workaround on the 802.11ax signaling.

Figures 6a and 6b illustrate a connectivity entity single-hop(two level) L2 resources allocation and routing and timing synchronization methodology at 4*20 MHz operation scenario. A central serving device entity (e.g. AP) allocates L2 resources and conduct timing synchronization for all second level serving devices (i.e. Res) using the 11ax trigger frame method and the REs use this allocation for either to generate synchronized UL and/or DL transmission to serve their associated end point devices (i.e. STAs) at this cycle. RE#1, 2 are allocated with 20 MHz each, while RE#3 is allocated with 40 MHz.

The central entity serving device (e.g. AP) resources allocation signaling can be done using distributed L2 resources allocation and/or centralized L2 resources allocation and timing synchronization methods. This resources allocation signaling can be performed by the control resources allocation entity 800 described below with respect to Fig. 8. In RE based distributed L2 resources allocation and timing method the central entity serving device allocates a pool of resources to a specific second level serving devices and then the second level serving devices (e.g. RE) decides how to allocate resources to his associated STAs and signals it to them using a per second level serving devices TF. In centralized L2 resources allocation and timing method the central entity serving device allocates resources to a specific end point device (that is associated with a specific second level serving devices), then the second level serving devices signals these allocated resources using a per second level serving devices TF.

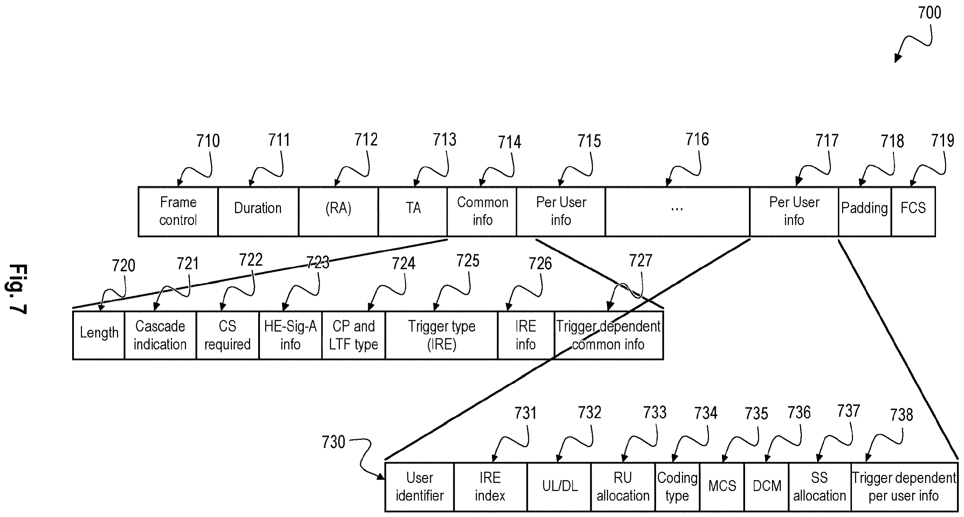

For 802.11ax where the allocation of L2 resources for both Downlink and Uplink is performed by the central entity or control entity 800 described below with respect to Fig. 8 (central entity serving device e.g. AP), the TF can be modified, e.g. as shown in Fig. 7, to support time synchronization, allocate L2 resources and transmission format signaling for this transmission. This signaling may include: Transmission format parameters (type: UL/DL, duration, etc.); Specific RU allocation per STA/ second level serving devices (e.g. RE); and transmit power.

This modification is relevant for both Access Points and second level serving devices (e.g. RE)s. This modification is critical for same channel relaying, as planned for the wider 80/160 MHz channels, as in many cases only a single channel is available. Without this modification the implementation of second level serving devices (e.g. RE)s will cause significant deterioration of the service level and QoS will not be guaranteed.

The solution described above allows adding information that is relevant to WLAN SON 802.11ax (HE) L2 resource allocation and timing signaling in the trigger frame common field and/or at the per-user trigger frame field to enable indication of WLAN SON L2 resource allocation and timing signaling to a specific second level serving devices (e.g. RE) /STA.

Central serving device entity (e.g. AP) L2 resources allocation and timing signaling (e.g. implemented by the control entity 800 described below with respect to Fig. 8) using modified 11ax trigger frame element can be performed in a distributed manner or in a centralized manner. In distributed resources allocation and timing method the central serving device entity (e.g. AP) signals the allocated pool of resources using a specific AIDs or a set of AIDs per second level serving devices (e.g. RE). The second level serving devices (e.g. RE) that decodes this allocation can know its L2 resources allocation and timing and can allocate them to a specific set of associated STAs. In centralized resources allocation and timing method the central serving device entity (e.g. AP) signals the allocated pool of resources using a specific AID per STA (this AID assign to STA at first association. The second level serving devices (e.g. RE) that decodes this allocation can know its L2 resources allocation and timing that are relevant for its associated STAs and then can transmit this info in its TF.

Another alternative method is using a proprietary TF resources allocation format, e.g. as described below with respect to Fig. 7 showing an example of a proprietary resources allocation signaling format solution that reuses the trigger frame defined in 11ax.

Fig. 7 is a schematic diagram illustrating an exemplary resources allocation signaling format 700 according to an exemplary aspect of the present disclosure. Fig. 7 shows an example of a proprietary resources allocation signaling format solution that reuses the trigger frame structure defined in 11ax.

The resources allocation signaling format 700 includes the following exemplary data fields: frame control 710, duration 711, RA 712, TA 713, common info 714, per user info 715, others 716, per user info 717, padding 718 and FCS 719. The common info field 714 may include the following proprietary exemplary extension data fields: length 720, cascade indication 721, CS required 722, HE-Sig-A Info 723, CP and LTF type 724, trigger type (IRE) 725, second level serving devices info 726 and trigger dependent info 727. The per user info field 717 may include the following proprietary exemplary extension data fields: user identifier 730, second level serving devices index 731, UL/DL 732, RU allocation 733, coding type 734, MCS 735, DCM 736, SS allocation 737 and trigger dependent per user info 738. second level serving devices fields denote intelligent range extender and may include information regarding the range extenders described above with respect to Figures 1 to 6.

Fig. 8 is a block diagram of an exemplary control entity 800 for controlling a communication network according to an exemplary aspect of the present disclosure.

The control entity 800 includes a traffic monitor 801 and a controller 802. The traffic monitor 801 may be a software or hardware unit that is configured to monitor data traffic as described below. The controller 802 may also be a software or hardware unit. The communication network may be comprised of a plurality of communication clients which are connectable via a plurality of connectivity entities, e.g. a communication network 100, 200, 300 as described above with respect to Figures 1 to 3.

The traffic monitor 801 is configured to monitor data traffic of at least one transmission queue of each connectivity entity of the plurality of connectivity entities. A connectivity entity may comprise an access point, e.g. gateway 101, 201, 301, e.g. as described above with respect to Figures 1 to 3 or a range extender 110, 120, 130, 210, 220 as described above with respect to Figures 1 and 2 or any other connectivity entity, e.g. one of the connectivity entities 310, 320, 330 as described above with respect to Figure 3. A transmission queue may for example comprise one of the transmission queues Q1 to Q12 as described above with respect to Figure 3. Data traffic may comprise in traffic, out traffic and traffic through MAC/PHY, e.g. as described above with respect to Figure 3. A communication client may be any client, station or mobile device, e.g. any of the clients 111, 112, 113, 121, 122, 131, 132 described above with respect to Figure 1 or any of the clients 202, 203, 204, 205, 211, 221, 222, 223 described above with respect to Figure 2 or any of the clients 305, 313, 323, 333 described above with respect to Figure 3.

The controller 802 is configured to allocate resources to each connectivity entity of the plurality of connectivity entities based on the monitored data traffic and according to quality of service requirements of each of the communication clients.

The control entity 800 may also be referred to as encore entity, e.g. according to the encore entity 410 described above with respect to Fig. 4 or may be referred to as communication manager, e.g. as described above with respect to Fig. 1.

The communication network comprises a self-organized multi-layered wireless LAN network, e.g. as described above with respect to Figures 1 to 3. Each connectivity entity may comprise at least one communication channel, e.g. a communication channel 208, 209, 218, 219, 228, 229 as described above with respect to Figure 2, configured to transmit the data traffic of the at least one transmission queue. The at least one transmission queue may comprise a Layer 2 transmission queue, e.g. as described above with respect to Figures 2 to 3.

The controller 802 may be configured to form a routing topology to connect the plurality of communication clients via the plurality of connectivity entities, e.g. a routing topology as described above with respect to Figures 2 to 3. The controller 802 may be configured to adjust routing and channel assignment of the plurality of connectivity entities based on the monitored data traffic and the quality of service requirements of each of the communication clients, e.g. as described above with respect to Figures 2 to 3. The controller 802 may allocate the resources based on Layer 2 load balancing air-access. The controller 802 may allocate the resources based on an air-access based traffic priorities fairness function, e.g. as described above with respect to Figures 2 to 3. Priorities fairness function means fairness between priorities segments. The quality of service requirements of each of the communication clients may be based on end-to-end quality of service requirements. The controller 802 may allocate the resources based on Layer 2 load balancing and Layer 2 re-routing between service and backhaul traffic requirements.

The plurality of connectivity entities may comprise at least one of a range extender and an access point, e.g. a range extender or intelligent range extender 110, 120, 130, 210, 220 as described above with respect to Figures 1 to 2 or an access point or gateway 101, 201, 301 as described above with respect to Figures 1 to 3. The plurality of communication clients may be connectable either directly or via one or more of the range extenders to the plurality of connectivity entities. The controller 802 may allocate the resources based on a total air-time required by each communication client passing through a specific number of the range extenders. The controller 802 may determine an air time required by a communication client passing through a specific range extender based on a function of a payload, a quality of service, a path loss, a signal-to-interface ratio, a channel load, a radio frequency bandwidth and a number of antennas of the specific range extender, e.g. as described above with respect to Figures 2 to 3. At least one of the connectivity entities may be collocated with a gateway or located in a remote server.

The controller 802 may control timing synchronization of the plurality of connectivity entities, e.g. as described above with respect to Figure 4. The plurality of connectivity entities may be hierarchically arranged, e.g. as shown above in Figures 1 to 3. The controller 802 may be configured to time synchronize connectivity entities of a first hierarchy level. The connectivity entities of the first hierarchy level may be configured to time synchronize connectivity entities of a second hierarchy level.

The control entity may be implemented in a gateway, e.g. a gateway 101, 201, 301 as described above with respect to Figures 1 to 3. The communication network may comprise a self-organized wireless LAN network comprising multiple layers of range extenders associated with specific communication clients, e.g. as described above with respect to Figures 1 to 3. The controller 802 may signal Layer 2 resources allocation and timing to the communication clients based on distributed L2 resources allocation and timing or based on centralized L2 resources allocation and timing, e.g. as described above with respect to Figures 2 to 3.

For the distributed L2 resources allocation and timing the controller 802 may allocate a pool of resources to a specific range extender which determines resources allocation and signals the allocated resources to its associated communication clients by using a trigger frame, e.g. as described above with respect to Figures 2 to 3. For the centralized L2 resources allocation and timing the controller 802 may allocate resources to a specific communication client that is associated with a specific range extender which signals the allocated resources to the specific communication client by using a trigger frame, e.g. as described above with respect to Figures 2 to 3.

The trigger frame may indicate L2 resources allocation, time synchronization and transmission format signaling, e.g. as described above with respect to Figures 2 to 3. The transmission format signaling may comprise at least one of the following parameters: transmission format parameters, specific radio unit allocation per communication client and/or range extender and transmit power, e.g. as described above with respect to Figure 7.

The data traffic may be based on hierarchical color coding reflecting a multi-layered network topology, e.g. as described above with respect to Figure 5, in particular with the right diagram 530 of Fig. 5. The hierarchical color coding may comprise a first section, e.g. a first section 532 as depicted in Fig. 5, indicating a central entity where the range extenders are connected to. The hierarchical color coding may comprise a second section, e.g. a second section 531 as depicted in Fig. 5, assigning a unique color code to each of the range extenders or to each group of range extenders.

A method for controlling a communication network comprised of a plurality of communication clients which are connectable via a plurality of connectivity entities, includes: monitoring data traffic of at least one transmission queue of each connectivity entity of the plurality of connectivity entities; and allocating resources to each connectivity entity of the plurality of connectivity entities based on the monitored data traffic and according to quality of service requirements of each of the communication clients.

The communication network may comprise a self-organized multi-layered wireless LAN network. The method may include forming a routing topology to connect the plurality of communication clients via the plurality of connectivity entities. The plurality of connectivity entities may comprise at least one of a range extender and an access point device. The method may further include: controlling timing synchronization of the plurality of connectivity entities. The communication network may comprise a self-organized wireless LAN network comprising multiple layers of range extenders associated with specific communication clients.

The method may further include: signaling Layer 2 resources allocation and timing to the communication clients based on distributed L2 resources allocation and timing or based on centralized L2 resources allocation and timing. The distributed L2 resources allocation and timing may comprise: allocating a pool of resources to a specific range extender; determining resources allocation by the specific range extender; and signaling the allocated resources by the specific range extender to its associated communication clients by using a trigger frame.

The centralized L2 resources allocation and timing may comprise: allocating resources to a specific communication client that is associated with a specific range extender; signaling, by the specific range extender, the allocated resources to the specific communication client by using a trigger frame. The trigger frame may indicate L2 resources allocation, time synchronization and transmission format signaling. The data traffic may be based on hierarchical color coding reflecting a multi-layered network topology, e.g. as described above with respect to Figures 2 and 3.

Aspects of the disclosure as described above introduce a standards-compliant solution for using IEEE 802.11ax synchronized mode of operation, for supporting WLAN 802.11ax based SON (self-organized Networks) network, in particular synchronized network that implements multiple layers Range Extenders (RE) deployments.

The devices and systems described in this disclosure may be implemented as Digital Signal Processors (DSP), microcontrollers or any other side-processor or hardware circuit on a chip or an application specific integrated circuit (ASIC).

Embodiments described in this disclosure can be implemented in digital electronic circuitry, or in computer hardware, firmware, software, or in combinations thereof, e.g. in available hardware of mobile devices or in new hardware dedicated for processing the methods described herein.

The present disclosure also supports a computer program product including computer executable code or computer executable instructions that, when executed, causes at least one computer to execute the performing and computing blocks described herein, in particular the methods 200, 300, 500 described above with respect to Figs. 2, 3 and 5 and the computing blocks described above with respect to Figure 4. Such a computer program product may include a non-transient readable storage medium storing program code thereon for use by a processor, the program code comprising instructions for performing the methods or the computing blocks as described above.

## EXAMPLES

The following examples pertain to further embodiments. Example 1 is a serving entities control entity for controlling a communication network comprised of a plurality of communication clients which are connectable via a plurality of serving entities, the serving entities control entity comprising: a traffic monitor, configured to monitor data traffic of at least one transmission queue of each serving entity of the plurality of serving entities; and a controller, configured to allocate resources to each serving entity of the plurality of serving entities based on the monitored data traffic and according to quality of service requirements of each of the communication clients.

In Example 2, the subject matter of Example 1 can optionally include that the communication network comprises a self-organized multi-layered wireless LAN network.

In Example 3, the subject matter of any one of Examples 1-2 can optionally include that each serving entity comprises at least one communication channel configured to transmit the data traffic of the at least one transmission queue.

In Example 4, the subject matter of any one of Examples 1-3 can optionally include that the at least one transmission queue comprises a Layer 2 transmission queue.

In Example 5, the subject matter of any one of Examples 1-4 can optionally include that the controller is configured to form a routing topology to connect the plurality of communication clients via the plurality of serving entities.

In Example 6, the subject matter of any one of Examples 1-5 can optionally include that the controller is configured to adjust routing and channel assignment of the plurality of serving entities based on the monitored data traffic and the quality of service requirements of each of the communication clients.

In Example 7, the subject matter of any one of Examples 1-6 can optionally include that the controller is configured to allocate the resources based on Layer 2 load balancing air-access.

In Example 8, the subject matter of any one of Examples 1-7 can optionally include that the controller is configured to allocate the resources based on an air-access based traffic priorities fairness function. Priorities fairness function means fairness between priorities segments.

In Example 9, the subject matter of any one of Examples 1-8 can optionally include that the quality of service requirements of each of the communication clients are based on end-to-end quality of service requirements.

In Example 10, the subject matter of any one of Examples 1-9 can optionally include that the controller is configured to allocate the resources based on Layer 2 load balancing and Layer 2 re-routing between service (i.e. traffic between serving entities and connectivity entities) and backhaul traffic (i.e. traffic between serving entities and other serving entities) requirements. Backhaul traffic refers to traffic between serving entities and other serving entities; and traffic between serving entities and connectivity entities.

In Example 11, the subject matter of any one of Examples 1-10 can optionally include that the plurality of serving entities comprises at least one of a range extender and an access point device.

In Example 12, the subject matter of Example 11 can optionally include that the plurality of communication clients are connectable either directly or via one or more of the range extenders to the plurality of serving entities.

In Example 13, the subject matter of any one of Examples 11-12 can optionally include that the controller is configured to allocate the resources based on a total air-time required by each communication client passing through a specific number of the range extenders.

In Example 14, the subject matter of Example 13 can optionally include that the controller is configured to determine an air time required by a communication client passing through a specific range extender based on a function of a payload, a quality of service, a path loss, a signal-to-interface ratio, a channel load, a radio frequency bandwidth and a number of antennas of the specific range extender.

In Example 15, the subject matter of any one of Examples 1-14 can optionally include that at least one of the serving entities is collocated with a gateway or located in a remote server.

In Example 16, the subject matter of any one of Examples 1-15 can optionally include that the controller is configured to control timing synchronization of the plurality of serving entities.

In Example 17, the subject matter of any one of Examples 1-16 can optionally include that the plurality of serving entities are hierarchically arranged.

In Example 18, the subject matter of Example 17 can optionally include that the controller is configured to time synchronize serving entities of a first hierarchy level; and that the serving entities of the first hierarchy level are configured to time synchronize serving entities of a second hierarchy level.

In Example 19, the subject matter of any one of Examples 1-18 can optionally include that the serving entities control entity is implemented in a gateway.

In Example 20, the subject matter of any one of Examples 1-19 can optionally include that the communication network comprises a self-organized wireless LAN network comprising multiple layers of range extenders associated with specific communication clients.

In Example 21, the subject matter of Example 20 can optionally include that the controller is configured to signal Layer 2 resources allocation and timing to the communication clients based on distributed L2 resources allocation and timing or based on centralized L2 resources allocation and timing.

In Example 22, the subject matter of Example 21 can optionally include that for the distributed L2 resources allocation and timing the controller allocates a pool of resources to a specific range extender which determines resources allocation and signals the allocated resources to its associated communication clients by using a trigger frame.

In Example 23, the subject matter of Example 21 can optionally include that for the centralized L2 resources allocation and timing the controller allocates resources to a specific communication client that is associated with a specific range extender which signals the allocated resources to the specific communication client by using a trigger frame.

In Example 24, the subject matter of any one of Examples 22-23 can optionally include that the trigger frame indicates L2 resources allocation, time synchronization and transmission format signaling.

In Example 25, the subject matter of Example 24 can optionally include that the transmission format signaling comprises at least one of the following parameters: transmission format parameters, specific radio unit allocation per communication client and/or range extender and transmit power.

In Example 26, the subject matter of any one of Examples 20-25 can optionally include that the data traffic is based on hierarchical color coding reflecting a multi-layered network topology.

In Example 27, the subject matter of Example 26 can optionally include that the hierarchical color coding comprises a first section indicating a central entity where the range extenders are connected to.

In Example 28, the subject matter of Example 27 can optionally include that the hierarchical color coding comprises a second section assigning a unique color code to each of the range extenders or to each group of range extenders.

Example 29 is a method for controlling a communication network comprised of a plurality of communication clients which are connectable via a plurality of serving entities, the method comprising: monitoring data traffic of at least one transmission queue of each serving entity of the plurality of serving entities; and allocating resources to each serving entity of the plurality of serving entities based on the monitored data traffic and according to quality of service requirements of each of the communication clients.

In Example 30, the subject matter of Example 29 can optionally include that the communication network comprises a self-organized multi-layered wireless LAN network.

In Example 31, the subject matter of any one of Examples 29-30 can optionally include: forming a routing topology to connect the plurality of communication clients via the plurality of serving entities.

In Example 32, the subject matter of any one of Examples 29-31 can optionally include that the plurality of serving entities comprises at least one of a range extender and an access point device.

In Example 33, the subject matter of any one of Examples 29-32 can optionally include: controlling timing synchronization of the plurality of serving entities.

In Example 34, the subject matter of any one of Examples 29-33 can optionally include that the communication network comprises a self-organized wireless LAN network comprising multiple layers of range extenders associated with specific communication clients.

In Example 35, the subject matter of Example 34 can optionally include: signaling Layer 2 resources allocation and timing to the communication clients based on distributed L2 resources allocation and timing or based on centralized L2 resources allocation and timing.

In Example 36, the subject matter of Example 35 can optionally include that the distributed L2 resources allocation and timing comprises: allocating a pool of resources to a specific range extender; determining resources allocation by the specific range extender; and signaling the allocated resources by the specific range extender to its associated communication clients by using a trigger frame.

In Example 37, the subject matter of Example 35 can optionally include that the centralized L2 resources allocation and timing comprises: allocating resources to a specific communication client that is associated with a specific range extender; signaling, by the specific range extender, the allocated resources to the specific communication client by using a trigger frame.

In Example 38, the subject matter of any one of Examples 36-37 can optionally include that the trigger frame indicates L2 resources allocation, time synchronization and transmission format signaling.

In Example 39, the subject matter of any one of Examples 34-38 can optionally include that the data traffic is based on hierarchical color coding reflecting a multi-layered network topology.

Example 40 is a serving entities control entity for controlling a communication network comprised of a plurality of communication clients which are connectable via a plurality of range extenders, the serving entities control entity comprising: a traffic monitor, configured to monitor data traffic of at least one transmission queue of each range extender of the plurality of range extenders; and a controller, configured to allocate resources to each range extender of the plurality of range extenders based on the monitored data traffic and according to quality of service requirements of each of the communication clients.

In Example 41, the subject matter of Example 40 can optionally include that the communication network comprises a self-organized wireless LAN network comprising multiple layers of range extenders associated with specific communication clients.

In Example 42, the subject matter of any one of Examples 40-41 can optionally include that the controller is configured to signal Layer 2 resources allocation and timing to the communication clients based on distributed L2 resources allocation and timing or based on centralized L2 resources allocation and timing.

In Example 43, the subject matter of Example 42 can optionally include that for the distributed L2 resources allocation and timing the controller allocates a pool of resources to a specific range extender which determines resources allocation and signals the allocated resources to its associated communication clients by using a trigger frame.

In Example 44, the subject matter of Example 42 can optionally include that for the centralized L2 resources allocation and timing the controller allocates resources to a specific communication client that is associated with a specific range extender which signals the allocated resources to the specific communication client by using a trigger frame.

In Example 45, the subject matter of any one of Examples 43-44 can optionally include that the trigger frame indicates L2 resources allocation, time synchronization and transmission format signaling.

In Example 46, the subject matter of any one of Examples 40-45 can optionally include that the data traffic is based on hierarchical color coding reflecting a multi-layered network topology.

In Example 47, the subject matter of Example 46 can optionally include that the hierarchical color coding comprises a first section indicating a central entity where the range extenders are connected to.

In Example 48, the subject matter of Example 46 can optionally include that the hierarchical color coding comprises a second section assigning a unique color code to each of the range extenders or to each group of range extenders.

Example 49 is a device for controlling a communication network comprised of a plurality of communication clients which are connectable via a plurality of serving entities, the method comprising: means for monitoring data traffic of at least one transmission queue of each serving entity of the plurality of serving entities; and means for allocating resources to each serving entity of the plurality of serving entities based on the monitored data traffic and according to quality of service requirements of each of the communication clients.

In Example 50, the subject matter of Example 49 can optionally include that the communication network comprises a self-organized multi-layered wireless LAN network.

Example 51 is a communication system, comprising: a plurality of serving entities; and a plurality of communication clients which are connectable via the plurality of serving entities; and a serving entities control entity, wherein the serving entities control entity is configured to monitor data traffic of at least one transmission queue of each serving entity of the plurality of serving entities and to allocate resources to each serving entity of the plurality of serving entities based on the monitored data traffic and according to quality of service requirements of each of the communication clients.

In Example 52, the subject matter of Example 51 can optionally include that the plurality of serving entities and the plurality of communication clients are arranged in a self-organized multi-layered wireless LAN network.

Example 53 is a computer readable non-transitory medium on which computer instructions are stored which when executed by a computer cause the computer to perform the method of any one of Examples 29 to 39.

In addition, while a particular feature or aspect of the disclosure may have been disclosed with respect to only one of several implementations, such feature or aspect may be combined with one or more other features or aspects of the other implementations as may be desired and advantageous for any given or particular application. Furthermore, to the extent that the terms "include", "have", "with", or other variants thereof are used in either the detailed description or the claims, such terms are intended to be inclusive in a manner similar to the term "comprise". Furthermore, it is understood that aspects of the disclosure may be implemented in discrete circuits, partially integrated circuits or fully integrated circuits or programming means. Also, the terms "exemplary", "for example" and "e.g." are merely meant as an example, rather than the best or optimal.

Although specific aspects have been illustrated and described herein, it will be appreciated by those of ordinary skill in the art that a variety of alternate and/or equivalent implementations may be substituted for the specific aspects shown and described without departing from the scope of the present disclosure. This application is intended to cover any adaptations or variations of the specific aspects discussed herein.

Although the elements in the following claims are recited in a particular sequence with corresponding labeling, unless the claim recitations otherwise imply a particular sequence for implementing some or all of those elements, those elements are not necessarily intended to be limited to being implemented in that particular sequence.

**Claims**

1. A serving entities control entity for controlling a communication network comprised of a plurality of communication clients which are connectable via a plurality of serving entities, the serving entities control entity comprising:

   a traffic monitor, configured to monitor data traffic and/or resource allocation request of at least one transmission queue of each serving entity of the plurality of serving entities; and
   a serving entities controller, configured to allocate resources to each serving entity of the plurality of serving entities based on the monitored data traffic and/or resource allocation request and according to quality of service requirements of each of the communication clients.

2. The serving entities control entity of claim 1, wherein the communication network comprises a self-organized multi-layered wireless and/or wired LAN network.

3. The serving entities control entity of claim 1 or 2, wherein each serving entity comprises at least one communication channel configured to transmit information about the data traffic of the at least one transmission queue.

4. The serving entities control entity of one of the preceding claims, wherein the at least one transmission queue comprises a Layer 2 transmission queue monitoring and/or controlling.

5. The serving entities control entity of one of the preceding claims, wherein the serving entities controller is configured to form a routing topology to connect the plurality of communication clients via the plurality of serving entities.

6. The serving entities control entity of one of the preceding claims, wherein the serving entities controller is configured to adjust routing and channel assignment and channel identification of the plurality of serving entities based on the monitored data traffic and the quality of service requirements of each of the communication clients.

7. The serving entities control entity of one of the preceding claims, wherein the serving entities controller is configured to allocate the resources based on information of Layer 2 load balancing air-access.

8. The serving entities control entity of one of the preceding claims, wherein the serving entities controller is configured to allocate the resources based on an air-access based traffic priorities fairness function.

9. The serving entities control entity of one of the preceding claims, wherein the quality of service requirements of each of the communication clients are based on end-to-end quality of service requirements.

10. The serving entities control entity of one of the preceding claims, wherein the serving entities controller is configured to allocate the resources based on Layer 2 load balancing and Layer 2 re-routing between service and backhaul traffic requirements.

11. The serving entities control entity of one of the preceding claims, wherein the plurality of serving entities comprises at least one of a range extender serving entity and an access point serving entity device.

12. The serving entities control entity of claim 11, wherein the plurality of communication clients are connectable either directly or via one or more of the range extender serving entity to the plurality of serving entities.

13. A method for controlling a communication network comprised of a plurality of communication clients which are connectable via a plurality of serving entities, the method comprising:

   monitoring data traffic of at least one transmission queue of each serving entity of the plurality of serving entities; and
   allocating resources to each serving entity of the plurality of serving entities based on the monitored data traffic and according to quality of service requirements of each of the communication clients.

14. The method of claim 13, wherein the communication network comprises a self-organized multi-layered wireless LAN network.

15. A computer readable non-transitory medium on which computer instructions are stored which when executed by a computer cause the computer to perform the method of claim 13 or 14.

**Fig. 1**

**Fig. 2**

Fig. 3

Fig. 4

**Fig. 5**

500

530

**802.11ax AP/RE/STA**

CCA - Energy Detection (-62 dBm)

Adjustable Threshold Values

CCA - Signal Detection

Any signal

Serving BSS | Range Extender | Other BSS / Other CC

CC belongs to the same super group | CC belongs to the same super group

Serving BSS | Range Extender | Other BSS

532

531

520

**802.11ax AP/STA**

Adjustable Threshold Values

Any signal

Serving BSS Same CC | Other BSS / Other CC

Serving BSS | Other BSS

510

**802.11ac AP/STA**

Fixed Threshold Values

Any signal

Any BSS: Serving or Other

Any BSS

Other traffic is unprotected

High — RSS — Low

610    611    613

612

AP
TF

RE
#1
TF

RE
#1
CK
BA

AP
TF

RE
#2
TF

UL STAs RE
#1

RE
#2
ACK
/BA

AP
TF

RE
#3
TF

UL STAs RE
#2

RE
#3
ACK
/BA

AP
TF

UL STAs RE
#3

Frequency

AP
TF

40MHz

40MHz

Time

**Fig. 6a**

620    621

622

AP
TF

DL RE #1

AP
TF

DL RE #2

UL ACK/
BA STAs
#1

AP
TF

DL RE #3
+ TF for ACK/BA
(40 MHz)

UL ACK/
BA STAs
#2

AP
TF

UL ACK/
BA STAs
RE #3

Frequency

Time

**Fig. 6b**

700

| Frame control | Duration | (RA) | TA | Common info | Per User info | ... | Per User info | Padding | FCS |
|---|---|---|---|---|---|---|---|---|---|

710 711 712 713 714 715 716 717 718 719

| Length | Cascade indication | CS required | HE-Sig-A info | CP and LTF type | Trigger type (IRE) | IRE info | Trigger dependent common info |
|---|---|---|---|---|---|---|---|

720 721 722 723 724 725 726 727

| User identifier | IRE index | UL/DL | RU allocation | Coding type | MCS | DCM | SS allocation | Trigger dependent per user info |
|---|---|---|---|---|---|---|---|---|

730 731 732 733 734 735 736 737 738

Fig. 7

22

800

801

802

Traffic
monitor

Controller

Control entity

**Fig. 8**

Europäisches
Patentamt

European
Patent Office

Office européen
des brevets

# EUROPEAN SEARCH REPORT

Application Number

EP 17 19 4170

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/222905 A1 (LEROUX PHILIPPE [CA] ET AL) 3 August 2017 (2017-08-03)<br>* abstract *<br>* paragraphs [0035], [0036] *<br>* paragraphs [0037] - [0039], [0041], [0042] *<br>* paragraph [0046] *<br>* paragraphs [0055] - [0059], [0061] *<br>----- | 1-15 | INV.<br>H04W72/04<br>H04W72/08<br><br>ADD.<br>H04W84/04 |
| X | US 2016/255538 A1 (SAVARIMUTHU MARIA VALAVAN [US] ET AL)<br>1 September 2016 (2016-09-01)<br>* abstract; figures 1,2 *<br>* paragraphs [0013] - [0016] *<br>* paragraphs [0019] - [0024] *<br>* paragraphs [0036] - [0040] *<br>----- | 1,3,7, 11-13,15 | |
| A | WO 2017/146793 A1 (UNIV ARIZONA STATE [US]; REISSLEIN MARTIN [US]; THYAGATURU AKHILESH [U) 31 August 2017 (2017-08-31)<br>* the whole document *<br>----- | 1-15 | |

TECHNICAL FIELDS
SEARCHED      (IPC)

H04W

The present search report has been drawn up for all claims

| Place of search | Date of completion of the search | Examiner |
|---|---|---|
| The Hague | 8 March 2018 | Jurca, Dan |

EPO FORM 1503 03.82 (P04C01)

## ANNEX TO THE EUROPEAN SEARCH REPORT
## ON EUROPEAN PATENT APPLICATION NO.

EP 17 19 4170

This annex lists the patent family members relating to the patent documents cited in the above-mentioned European search report.
The members are as contained in the European Patent Office EDP file on
The European Patent Office is in no way liable for these particulars which are merely given for the purpose of information.

08-03-2018

| Patent document cited in search report | Publication date | Patent family member(s) | Publication date |
|---|---|---|---|
| US 2017222905 A1 | 03-08-2017 | US 2017222905 A1<br>WO 2017133600 A1 | 03-08-2017<br>10-08-2017 |
| US 2016255538 A1 | 01-09-2016 | NONE | |
| WO 2017146793 A1 | 31-08-2017 | NONE | |

EPO FORM P0459

For more details about this annex : see Official Journal of the European Patent Office, No. 12/82